# EUROPEAN PATENT APPLICATION

(11) **EP 2 117 203 A1**
(43) Date of publication of application: **11.11.2009**
(21) Application number: 07860047.5
(22) Date of filing: 25.12.2007
(51) Int. Cl.: H04M 1/02, H04Q 7/32, H05K 5/02

(54) **PORTABLE ELECTRONIC APPARATUS**

(30) Priority: 28.02.2007 JP 2007049131
(71) Applicant: NEC Corporation, Minato-ku Tokyo 108-8001 (JP)
(72) Inventor: MINE, Takashi, Tokyo 108-8001 (JP); NAGAI, Michio, Tokyo 108-8001 (JP)
(74) Representative: Schöniger, Franz-Josef
(86) International application number: PCT/JP2007/074818
(87) International publication number: WO 2008/105131

(57) **Abstract**

A hinge mechanism 30 connects an upper case 11 having a display section 10 and a lower case 21 having an operating section 20 to that the cases can be opened and closed. The hinge mechanism is provided with two connecting members 31 and 32 arranged over the upper case 11 and the lower case 21; a first hinge shaft 33 rotatably connecting upper case 11 and connecting members 31 and 32; and second hinge shaft 34 rotatably connecting lower case 21 and connecting members 31 and 32. The two connecting members 31 and 32 are arranged to sandwich upper case 11 and lower case 21 from the outside. The first hinge shaft 33 and second hinge shaft 34 are arranged parallel to each other.

## Description

### TECHNICAL FIELD

The present invention relates to a portable electronic apparatus, in which at least two cases are rotatably connected via connecting means.

### BACKGROUND ART

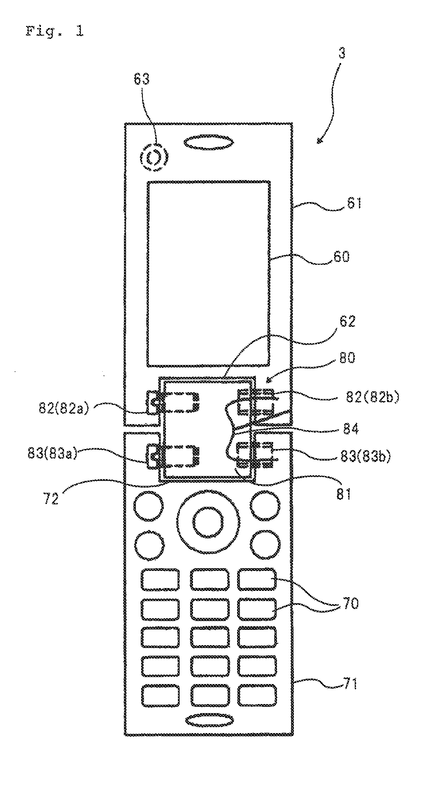

FIG. 1 illustrates a portable phone as an example of a portable electronic apparatus. Portable phone 3 shown in the figure includes upper case 61 provided with display section 60 and lower case 71 provided with operating section 70. Upper and lower cases 61 and 71 are connected by hinge mechanism 80 so as to be rotatable (i.e., openable) 360 degrees.

Hinge mechanism 80 includes connecting member 81 which is arranged to straddle upper case 61 and lower case 71, first hinge shaft 82 rotatably connecting upper case 61 and connecting member 81, and second hinge shaft 83 rotatably connecting lower case 71 and connecting member 81. More particularly, recesses 62 and 72 are formed in adjacent end portions of upper and lower cases 61 and 71, respectively. Connecting member 81 is arranged in a space defined by joining recess 62 and recess 72 to each other. In the case where one edge of upper case 61 adjacent to lower case 71 is referred to as a "lower edge" and one edge of lower case 71 adjacent to upper case 61 is referred to as an "upper edge," recess 62 is placed in center of the lower edge of upper case 61 and recess 72 is placed in center of the upper edge of lower case 71, and connecting member 81 is arranged in the inside of recesses 62 and 72.

First hinge shaft 82 includes solid hinge shaft 82a and hollow hinge shaft 82b, which are coaxially arranged. Each ends of hinge shafts 82a and 82b are fixedly fitted into opposite inner surfaces of recess of upper case 61, respectively. The other ends of hinge shafts 82a and 82b are fitted into side surfaces of connecting member 81, respectively. In the meantime, second hinge shaft 83 includes solid hinge shaft 83a and hollow hinge shaft 83b, which are coaxially arranged. Each ends of hinge shafts 83a and 83b are fixedly fitted into opposite inner surfaces of the recess of lower case 71, respectively. The other ends of hinge shafts 83a and 83b are fitted into side surfaces of connecting member 81, respectively. The hinge having the two hinge shafts, which are arranged in parallel as above, is often referred to as a "parallel two-shaft hinge." This term will be used herein when necessary. Details of a connecting structure using the parallel two-shaft hinge are disclosed in Japanese laid-open publication No. 2002-171324.

In addition, electric cable 84 extends through the inside of connecting member 81, for electrically connecting upper case 61 and lower case 71. One end of electric cable 84 is introduced into upper case 61 through the inside of hinge shaft 82b, and the other end of electric cable 84 is introduced into lower case 71 through the inside of hinge shaft 83b.

In addition, a Charge Coupled Device (CCD) camera (sub-camera 63) is provided on one surface of upper case 61 where display section 60 is provided. An operator generally uses sub-camera 63 to take a self-portrait, and in the case of a portable phone having a video-phone function, to photograph his/her images. Herein, surface of an upper case on which a display section and a surface of a lower case on which an operating section is provided will sometimes be referred to as "front surface," and surfaces opposite to the front surface will sometimes be referred to as "rear surface."

In addition, as described above, upper case 61 and lower case 71 are connected by hinge mechanism 80 so as to be openable 360 degrees. Here, the term "openable 360 degrees" indicates that the front surface of upper case 61 and the front surface of lower case 71 can be open from a state where the front surface of upper case 61 and the front surface of lower case 71 face each other (i.e., a completely-closed state) to a state where rear surface of upper case 61 and the rear surface of lower case 71 face each other (i.e., a completely-open state).

Although not illustrated, separately from sub-camera 63, a CCD camera (i.e., a main camera) is provided on the rear surface of upper case 61 or lower case 71. In general, the main camera is implemented with a CCD camera that has more pixels and a higher definition than sub-camera 63.

### DISCLOSURE

### TECHNICAL PROBLEM

In a portable electronic apparatus in which an upper case and a lower case are connected by parallel two-shaft hinges so as to be openable 360 degrees, a connecting member which is arranged to straddle the two cases is arranged on the two cases. Thus, in order to ensure a space where the connecting members are arranged, it is necessary to form recesses by forming the center of the lower edge of the upper case and the center of the upper edge of the lower case into concave shape. As a result, the area of the front surface of the upper case and the area of the front surface of the lower case are reduced, thereby making it difficult to enlarge the size of a display section or an operating section.

### TECHNICAL SOLUTION

A portable electronic apparatus comprises an upper case provided with a display section, a lower case forming a pair with the upper case, and a hinge mechanism openably connecting the upper case and the lower case, wherein the hinge mechanism includes two connecting members which are arranged to straddle the upper case and the lower case; a first hinge shaft rotatably connecting the upper case and the connecting members; and a second hinge shaft rotatably connecting the lower case and the connecting members. The two connecting members are arranged outside of the upper case and the lower case to sandwich the upper case and the lower case. The first hinge shaft and the second hinge shaft are arranged in parallel.

One object of the invention is to provide a portable electronic apparatus in which two cases are openably connected without reducing the front or rear surface area of the cases.

The above and other objects, features and advantages of the present invention will be more apparent from the following description taken in conjunction with the accompanying drawings, which illustrate exemplary embodiments of the invention.

### DESCRIPTION OF DRAWINGS

FIG. 1 illustrates an overall configuration of a related portable phone;
FIG. 2 illustrates an overall configuration of a portable phone according to a first embodiment of the invention;
FIG. 3 (a) is an enlarged view and FIG. 3 (b) is an opened-up view of the hinge shaft shown in FIG. 2;
FIG. 4 is an exploded view of the hinge shaft shown in FIG. 2;
FIG. 5 illustrates an overall configuration of a portable phone according to a second embodiment of the invention; and
FIG. 6 illustrates the portable phone shown in FIG. 5, which is open 360 degrees.

### BEST MODE

### First Embodiment

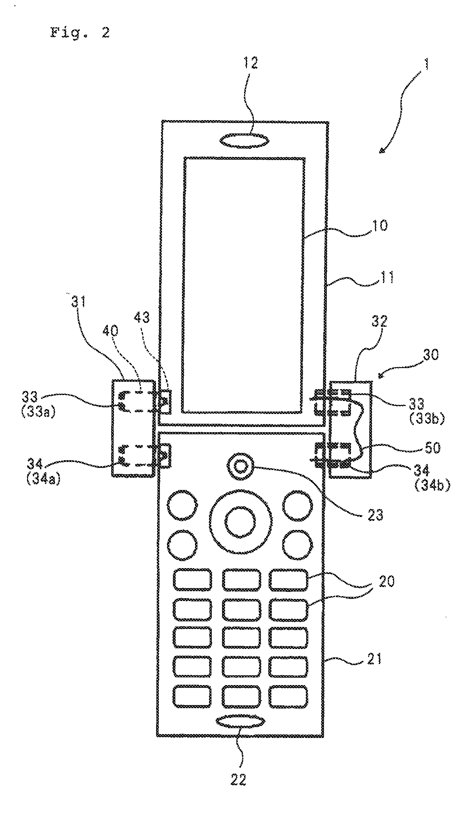

One exemplary embodiment of a portable electronic apparatus according to the invention will now be described more fully hereinafter, taking as an example a portable phone. FIG. 2 illustrates an overall configuration of a portable phone according to a first embodiment of the invention. Portable phone 1 shown in FIG. 2 includes upper case 11 provided with display section 10 and lower case 21 forming a pair with upper case 11. Upper case 11 and lower case 21 are connected by hinge mechanism 30 so as to be rotatable (openable) 360 degrees. In this embodiment, operating section 20 is provided on lower case 21.

Display section 10 provided in upper case 11 is a liquid crystal panel, One surface, on which liquid crystal panel 10 is provided, is a front surface, and the other surface (not shown) opposite to the front surface is a rear surface of upper case 11. In addition, speaker 12 is provided on the upper portion of the front surface of upper case 11.

Operating section 20 provided on lower case 21 consists of a plurality of input keys. One surface, on which input keys 20 are provided, is a front surface of lower case 21, and the other surface (not shown) opposite to the front surface is a rear surface of lower case 21. In addition, microphone 22 is provided on the lower portion of the front surface of lower case 21, and a CCD camera 23 is provided on the upper portion of the front surface of lower case 21.

As described above, upper case 11 and lower case 21 are connected by hinge mechanism 30 so as to be openable 360 degrees. Here, the meaning of the term "openable 360 degrees" is the same as described above. Specifically, a completely-closed state is when an angle θ defined by the front surface of upper case 11 and the front surface of lower case 21 is 0 degree, and a completely-open state is when the angle θ is 360 degrees. Further, in portable phone 1 of this embodiment, opening/closing of cases 11 and 21 is temporarily stopped when the angle θ is 0, 160, and 360 degrees, respectively, and details thereof will be described later.

Hinge mechanism 30 includes two connecting members 31 and 32, each of which is arranged to straddle upper case 11 and lower case 21, first hinge shafts 33 rotatably connecting upper case 11 and connecting members 31 and 32, and second hinge shafts 34 rotatably connecting lower case 21 and connecting members 31 and 32. Two connecting members 31 and 32 are arranged facing each other so as to sandwich adjacent ends of upper and lower cases 11 and 21 from the outside. Sometimes, in the following description, connecting member 31 arranged on the left of the plane of the paper of FIG. 2 will be referred to as "left connecting member 31," and connecting member 32 arranged on the right of the plane of paper of FIG. 2 will be referred to as "right connecting member 32." It should be understood, however, that such a description is merely for the sake of convenience.

Upper case 11 and connecting members 31 and 32 are rotatably connected by first hinge shafts 33. In addition, lower case 21 and connecting members 31 and 32 are rotatably connected by second hinge shafts 34, which are parallel to first hinge shafts 33. That is, a connection is established by parallel two-shaft hinges.

Here, first hinge shafts 33 include solid hinge shaft 33a and hollow hinge shaft 33b, which are coaxially arranged. In addition, second hinge shafts 34 include solid hinge shaft 34a and hollow hinge shaft 34b, which are coaxially arranged. Then, left connecting member 31 and cases 11 and 21 are connected by solid hinge shafts 33a and 34a. Specifically, each ends of hinge shafts 33a and 34a are fixedly fitted into a side surface of left connecting member 31, and the other ends of hinge shafts 33a and 34a are fixedly fitted into side surfaces of cases 11 and 21 opposite to the side surface of left connecting member 31. In addition, right connecting member 32 and cases 11 and 21 are connected by hollow hinge shafts 33b and 34b. Specifically, each ends of hinge shafts 33b and 34n are fixedly fitted into a side surface of right connecting member 32, and the other ends of hinge shafts 33b and 34b are rotatably fitted into side surfaces of cases 11 and 21 opposite to the side surface of right connecting member 32. The ends of hinge shafts 33b and 34b fitted into the side surfaces of cases 11 and 21 are fixed so as not to be separated from the side surface of cases 11 and 21.

Describing the positional relationships between connecting members 31 and 32 and cases 11 and 21 on the basis of hinge shafts, right connecting member 31 and left connecting member 32 are arranged to sandwich upper and lower cases 11 and 21 from the outside thereof, in both directions along the axis of the hinge shafts.

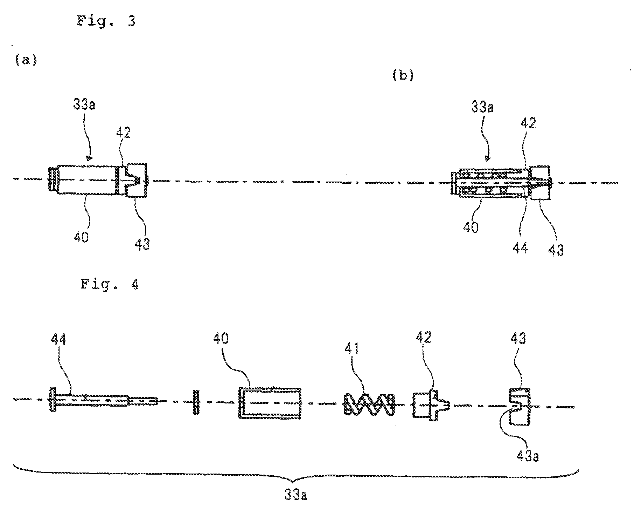

Below, a more detailed description will be given of the structure of solid hinge shafts 33a and 34a. Of course, hinge shafts 33a and 34a have a common structure. Therefore, only hinge shaft 33a will be described herein. FIG. 3 (a) is an enlarged view of hinge shaft 33a, FIG. 3 (b) is an opened-up view of hinge shaft 33a, and FIG. 4 is an exploded view of hinge shaft 33a.

Hinge shaft 33a includes cylindrical case 40 having a substantially elliptical cross section, coil spring 41 stored inside cylindrical case 40, convex cam 42 biased by coil spring 41, concave cam 43 oppositing to convex cam 42, shaft pin 44 extending through the foregoing parts.

Convex cam 42 is fitted into a recess of cylindrical case 40 and is constantly pressed to concave cam 43 by coil spring 41. Furthermore, convex cam 42 is prevented from rotating with respect to cylindrical case 40. In addition, shaft pin 44 extends through the bottom surface of cylindrical case 40, coil spring 41, convex cam 42 and concave cam 43, and is fixed to concave cam 43. Grooves 43a (only one groove is shown in the figures) are formed in the surface of concave cam 43 opposite to convex cam 42, such that convex cam 42 fits into one of grooves 43a when it rotates 0, 80 and 180 degrees from the reference position. The reference position indicates the position of convex cam 42 in the completely-closed state. As shown in FIG. 2, cylindrical case 40 is fixedly fitted into a side surface of left connecting member 31, and concave cam 43 is fixedly fitted into a side surface of lower case 21. Of course, the cylindrical case of hinge shaft 34a is fixedly fitted into a side surface of left connecting member 31, concave cam is fixedly fitted into a side surface of lower case21.

Upper case 11 and lower case 21 are connected by two hinge shafts 33a and 34a having the above-described structure so as to open 360 degrees. Furthermore, upper case 11 and lower case 21 are temporarily fixed when the opening angle is 0, 160 (=80+80), and 360 (=180+180) degrees.

Returning to FIG. 2, electric cable 50 electrically connecting upper and lower cases 11 and 21 extends through the inside of right connecting member 32. One end of electric cable 50 is introduced into upper case 11 through hollow hinge shaft 33b, and the other end of electric cable 50 is introduced into lower case 21 through hollow hinge shaft 34b.

CCD camera 23 is provided on the front surface of lower case 21. In other words, CCD camera 23 is provided on the front surface of lower case 21, which is openable 360 degrees with respect to upper case 11 on which liquid crystal panel 10 is provided. This means that one CCD camera 23 can be used as two cameras such as a sub-camera and a main camera. Specifically, when an operator takes his/her pictures, cases 11 and 21 are open 160 degrees so that CCD camera 23 faces the operator. Then, photographed images are displayed on liquid crystal panel 10, and the operator can take pictures while checking the images. When the operator takes pictures of other people or sceneries, cases 11 and 21 are open 360 degrees so that CCD camera 23 faces a object to be photographed. Since photographed images are displayed on liquid crystal panel 10 even if cases 11 and 21 are open 360 degrees, the operator can take pictures while checking the images.

In addition, referring to FIG. 2, it can be appreciated that liquid crystal panel 10 extends to an area on the front surface of upper case 11, sandwiched between left connecting member 31 and right connecting member 32. It can also be appreciated that CCD camera 23 is provided in an area on the front surface of lower case 21, sandwiched between left connecting member 31 and right connecting member 32. Comparing FIG. 2 with FIG. 1, it is apparent that effective spaces on the front surfaces of cases are enlarged since connecting members which are arranged to straddle upper and lower cases are constructed with two separate members, which are arranged outside the cases. In the portable phone of this embodiment, it is possible to enlarge a liquid crystal panel or arrange a CCD camera using the spaces enlarged as above.

### Second Embodiment

Below, another exemplary embodiment of the portable electronic apparatus according to the invention will now be described more fully, taking as an example a portable phone. The basic construction of the portable phone of this embodiment is the same as that of the portable phone of the first embodiment. Therefore, a description of the same parts will be omitted, and only different parts will be described hereinafter.

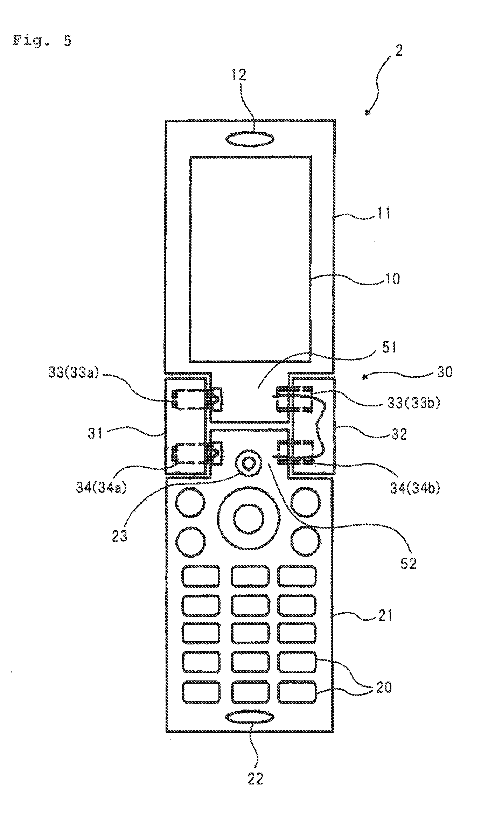

FIG. 5 illustrates an overall configuration of portable phone 2 of this embodiment. As is apparent when comparing FIG. 4 with FIG. 2, upper case 11 and lower case 21 of portable phone 2 of this embodiment have a different outer shape from those of portable phone 1 of the first embodiment. Specifically, on one end of upper case 11 adjacent to lower case 21, protrusion 51 extending toward lower case 21 is formed. On one end of lower case 21 adjacent to upper case 11, protrusion 52 extending toward upper case 11 is formed. In addition, left connecting member 31 and right connecting member 32 are arranged outside protrusions 51 and 52 to sandwich protrusions 51 and 52. In addition, CCD camera 23 is provided on protrusion 52 of lower case 21, which is sandwiched between left connecting member 31 and right connecting member 32.

First hinge shaft 33 and second hinge shaft 34 shown in the figure are substantially the same as those in the first embodiment in terms of structure and attaching method. Therefore, portable phone 2 of this embodiment is also openable 360 degrees and is also temporarily fixed at open angles 0, 160, and 360 degrees.

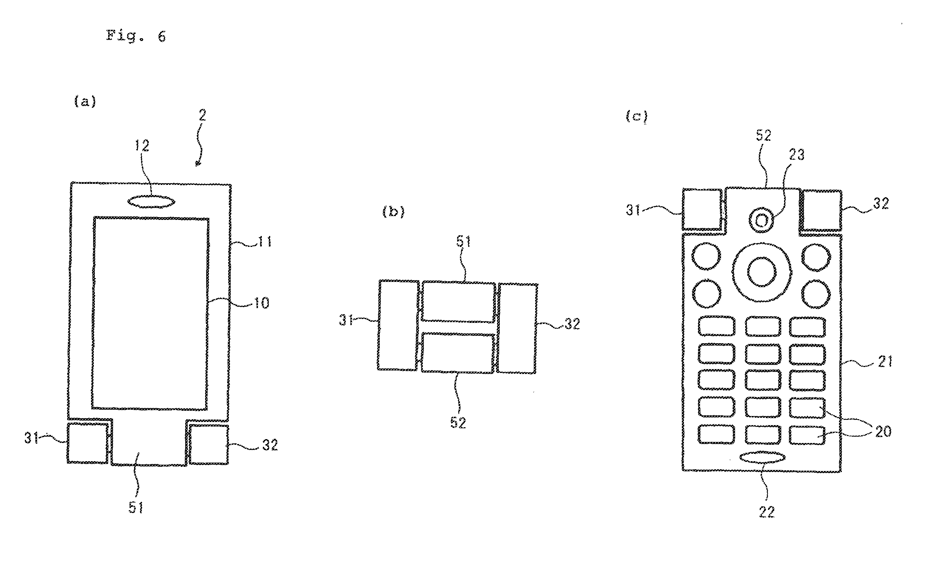

The state where upper and lower cases 11 and 21 are open 360 degrees is illustrated in FIG. 6 (a) through (c).

FIG. 6 (a) is a plan view of the front face of upper case 11, which is open 360 degrees, FIG. 6 (c) is a plan view of the front face of lower case 21, which is open 360 degrees, and FIG. 6 (b) is a side elevation view of protrusions 51 and 52.

As is apparent when comparing FIG. 5 with FIG. 1, the area of protrusions 51 and 52 shown in FIG. 5 is not greatly different from that of both spaces outside of recesses 62 and 72 shown in FIG. 1. That is, the area of the front surfaces in portable phone 3 of this embodiment is not greatly different from the area of the front surfaces of portable phone 3 shown in FIG. 1. However, in portable phone 3 shown in FIG. 1, the spaces outside of recesses 62 and 72 are separated from each other by connecting member 81, which is arranged inside of two cases 61 and 71. In contrast, in portable phone 2 of this embodiment, two separate members which configure connecting members arranged to straddle two cases 11 and 21, and these members 31 and 32 are arranged outside of protrusions 51 and 52. Accordingly, a continuous space having substantially the same area as that of the spaces outside of recesses 62 and 72 is ensured at the ends of two cases 11 and 21 oppositing each other. Even though space sizes are substantially the same, one continuous space and a plurality of separated spaces are greatly different taking into consideration that one continuous space raises the degree of freedom in terms of the arrangement of devices.

The specification has been described hereinbefore with respect to the embodiments of the invention, taking as an example the portable phone. However, the invention can be applied to a variety of portable electronic apparatuses, in which an upper case provided with a display section and a lower case forming a pair with the upper case are openably connected by a hinge mechanism.

The present application claims priority from Japanese Patent Application Number 2007-49131, filed February 28, 2007, the disclosure of which is hereby incorporated by reference herein in its entirety.

## Claims

1. A portable electronic apparatus comprising an upper case provided with a display section, a lower case forming a pair with the upper case, and a hinge mechanism openably connecting the upper case and the lower case,
wherein the hinge device includes:
two connecting members arranged to straddle the upper case and the lower case;
a first hinge shaft rotatably connecting the upper case and the connecting members; and
a second hinge shaft rotatably connecting the lower case and the connecting members, wherein
the two connecting members are arranged outside of the upper case and the lower case so as to sandwich the upper case and the lower case, and
the first hinge shaft and the second hinge shaft are arranged in parallel.

2. The portable electronic apparatus of claim 1, wherein the two connecting members are arranged on both outsides of adjacent ends of the upper case and the lower case.

3. The portable electronic apparatus of claim 1, wherein the upper case has a protrusion on one end thereof adjacent to the lower case, the protrusion extending toward the lower case, and the lower case has a protrusion on one end thereof adjacent to the upper case, the protrusion extending toward the upper case, and
wherein the two connecting members are arranged outside of the two protrusions so as to sandwich the protrusions.

4. The portable electronic apparatus of any one of claims 1 through 3, wherein the upper case and the lower case are connected to open 360 degrees from a state where front surfaces thereof face each other to a state where rear surfaces thereof face each other,
the portable electronic apparatus further comprising a camera provided on the front surface of the lower case.

5. The portable electronic apparatus of claim 4, wherein the camera is provided in an area on the front surface of the lower case, sandwiched by the two connecting members.
